# EUROPEAN PATENT APPLICATION

(11) **EP 2 426 040 A1**
(43) Date of publication of application: **07.03.2012**
(21) Application number: 10009181.8
(22) Date of filing: 03.09.2010
(51) Int. Cl.: B62J 9/02, B62K 21/16, B62K 21/12, B62J 99/00, B62K 21/26

(54) **Bicycle handlebar**

(71) Applicant: Hon, Joshua, San Chung City T'ai pei (TW)
(72) Inventor: Uimonen, Joakim, Sanchong City Taipei County 241 (TW); Hon, Joshua, San Chung City Taipei Hsien 241 (TW)
(74) Representative: Altenburg, Bernardus Stephanus Franciscus

(57) **Abstract**

A bicycle handlebar (1,1a) is disclosed, which comprises a grip (10), a storage main body (20) and a tool (30). The grip (10) comprises a grip storage slot (11). The storage main body (20) comprises a cylindrical member (21) and a carrying portion (22). The carrying portion (22) is connected to the cylindrical member (21). The cylindrical member (21) comprises an elongated slot (211), which passes through the cylindrical member (21). The carrying portion (22) comprises at least one engaging slot (221,221a) and an opening portion (222), wherein the engaging slot (221,221a) and the opening portion (222) are connected. The tool (30) comprises a main lever (31) and at least one side lever (32). The main lever (31) is tightly stored in the elongated slot (211), and the side lever (32) is stored in the engaging slot (221,221a). The tool (30) can be stored in the storage main body (20) in a shake-free manner, and the tool (30) can be directly retrieved from the opening portion (222) without removal of the storage main body (20).

## Description

### BACKGROUND OF THE INVENTION

### 1. Field of the Invention

The present invention relates to a bicycle handlebar; more particularly, the present invention relates to a bicycle handlebar which allows a user to directly store/retrieve a tool.

### 2. Description of the Related Art

As compared to other transportation vehicles, bicycles have a comparatively simpler structure and higher possibility for users to do repairs themselves. Therefore, it is advantageous to combine a repair tool with a bicycle. Currently, most on-vehicle repair tools are hidden within the bicycle, such as being stored in a tube of a bicycle, such as the steel tube of a bicycle handlebar. For example, U.S. Patent No. 6,564,982 (Woods et al., May 20, 2003) discloses an in-handle storage device that provides a storage space installed inside a bicycle handlebar for a user to store personal items such as a driver's license, wherein the storage space is a cylindrical storage tube installed inside the bicycle handlebar. However, if the user only stores a few items in the storage space without filling it up, the stored items might shake while the user is riding the bicycle, which may influence the user's riding experience and possibly cause damage to the stored items.

U.S. Patent No. 5,950,498 (Gossett et al., Sep. 14, 1999) discloses a handle storage apparatus and method that facilitates the storage of items inside a handle, such that a user can store tools or other items inside the storage apparatus. However, it has problems similar to those of U.S. Patent No. 6,564,982.

Taiwan Patent No. M284614 (Huang, January 1, 2006) and one embodiment of U.S. Patent No. 5,251,341 (Seals, October 12, 1993) disclose that a tool set can be stored in a steel tube of a bicycle handlebar. The tool set comprises a plurality of tools mounted to a base, and the tool set can be stored within an open-ended steel tube of the bicycle handlebar via the base, such that a user can store/retrieve the tool set according to the above structure. However, with the increasing numbers of uses, the junction tightness between the base and the steel tube will be weakened. Furthermore, due to the weight of the tool set, the tool set is subject to being lost or dropped owing to the vibration or shock while the user is riding the bicycle, which is also very dangerous to the user.

Therefore, there is a need to provide a bicycle handlebar to mitigate and/or obviate the aforementioned problems.

### SUMMARY OF THE INVENTION

It is an object of the present invention to provide a bicycle handlebar capable of providing a tool storage space.

It is another object of the present invention to provide a bicycle handlebar allowing a user to conveniently and quickly retrieve and store a tool.

To achieve the abovementioned objects, the bicycle handlebar of the present invention comprises a grip, wherein the grip comprises a grip storage slot. The bicycle handlebar further comprises a storage main body and a tool.

The storage main body comprises a cylindrical member and a carrying portion. The carrying portion is connected to the cylindrical member. The cylindrical member comprises an elongated slot and at least one positioning portion. The elongated slot extends through the cylindrical member, and the positioning portion is installed outside the cylindrical member. The carrying portion comprises at least one engaging slot and an opening portion, wherein the engaging slot and the opening portion are connected. When the storage main body is installed in the grip, the carrying portion is installed outside the grip storage slot, the cylindrical member is installed inside the grip storage slot, and the positioning portion is engaged to the grip storage slot, thereby fastening the storage main body to the grip.

The tool comprises a main lever and at least one side lever. The main lever is tightly stored in the elongated slot, and the side lever is stored in the engaging slot. Therefore, the engaging slot can secure the side lever so as to prevent the tool from freely sliding, such that the tool can be stored in the storage main body more tightly and securely.

According to the above structure, the tool can be stored in the storage main body in a shake-free manner, and the tool can be directly retrieved by a user from the opening portion without removing the storage main body.

In one embodiment, the engaging slot has a gap with its direction substantially parallel to a longitudinal direction of the cylindrical member. The carrying portion further comprises at least one securing unit, wherein the securing unit is disposed to the at least one engaging slot.

When the user puts the tool in the storage main body, the main lever is continuously inserted into the elongated slot from the opening portion along the longitudinal direction of the cylindrical member. When the tool is stored in the storage main body and the side lever is engaged to the carrying portion, the securing unit can secure the side lever so as to fasten the tool to the storage main body.

In one embodiment, the securing unit is a cap member disposed to the engaging slot. Accordingly, the securing unit and part of the carrying portion are connected to form the engaging slot. When the user puts the tool in the storage main body and continuously pushes the tool from the opening portion along the longitudinal direction of the cylindrical member, the side lover would be pushed against the carrying portion, and then the user can rotate the tool so as to secure the side lever into the securing unit.

Other objects, advantages, and novel features of the invention will become more apparent from the following detailed description when taken in conjunction with the accompanying drawings. The text of the claims is incorporated in the description by reference.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
FIG. 1 illustrates a schematic drawing according to a first embodiment of the present invention.
FIG. 1A illustrates another schematic drawing according to the first embodiment of the present invention.
FIG. 2 illustrates a detailed assembly schematic drawing according to the first embodiment of the present invention.
FIG. 3 illustrates a schematic drawing according to a second embodiment of the present invention.
FIG. 3A illustrates another schematic drawing according to the second embodiment of the present invention.
FIG. 3B illustrates a use case schematic drawing according to the second embodiment of the present invention.
FIG. 3C illustrates another use case schematic drawing according to the second embodiment of the present invention.
FIG. 4 illustrates a detailed assembly schematic drawing according to the second embodiment of the present invention.
FIG. 5 illustrates a detailed schematic drawing of a tool according to the present invention.

### DETAILED DESCRIPTION OF THE PREFERRED EMBODIMENT

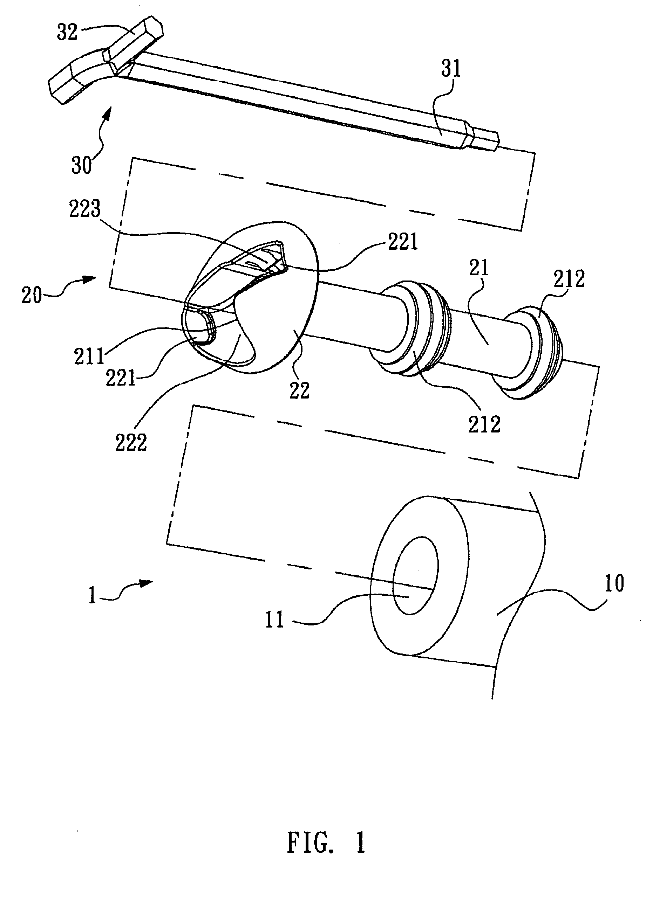

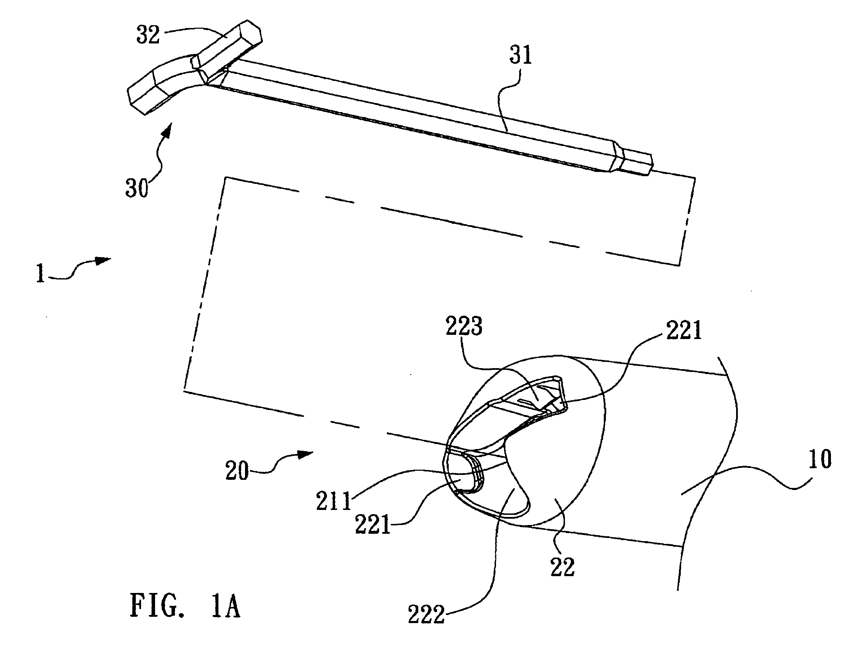

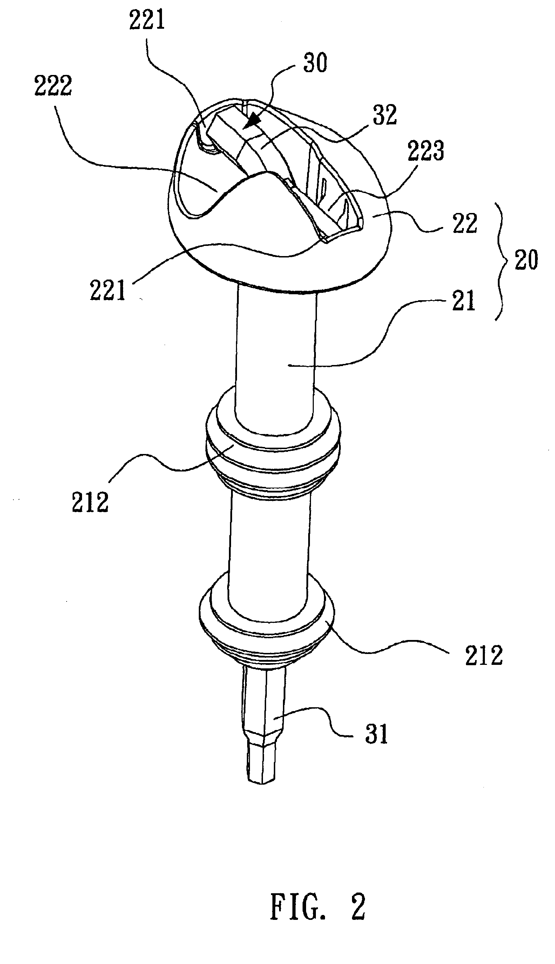

Please refer to FIG. 1, FIG. 1A, and FIG. 2, wherein FIG. 1 illustrates a schematic drawing according to a first embodiment of the present invention; FIG. 1A illustrates another schematic drawing according to the first embodiment of the present invention; and FIG. 2 illustrates a detailed assembly schematic drawing according to the first embodiment of the present invention.

As shown in FIG. 1, a bicycle handlebar 1 comprises a grip 10, wherein the grip 10 comprises a grip storage slot 11. The present invention is characterized in that the bicycle handlebar 1 further comprises a storage main body 20 and a tool 30.

The storage main body 20 comprises a cylindrical member 21 and a carrying portion 22. The cylindrical member 21 comprises an elongated slot 211 and at least one positioning portion 212 (in this embodiment, the cylindrical member 21 comprises two positioning portions 212). The elongated slot 211 passes through the cylindrical member 21. The two positioning portions 212 are installed outside the cylindrical member 21.

The carrying portion 22 comprises two engaging slots 221 and an opening portion 222. The two engaging slots 221 are disposed to two ends of the opening portion 222 and are connected to the opening portion 222. When the storage main body 20 is installed in the handlebar 10, the carrying portion 22 is installed outside the grip storage slot 11 (as shown in FIG. 1A), the cylindrical member 21 is installed inside the grip storage slot 11, and the positioning portions 212 are engaged to the grip storage slot 11, thereby fastening the storage main body 20 to the grip 10.

The tool 30 comprises a main lever 31 and at least one side lever 32 (in this embodiment, the tool 30 comprises two side levers 32). The main lever 31 is tightly stored in the elongated slot 211, and the side levers 32 are stored in the engaging slots 221. Therefore, the engaging slots 211 can secure the side levers 32 so as to prevent the tool 30 from freely sliding, such that the tool 30 can be stored in the storage main body 20 more tightly and securely.

According to the above structure, the tool 30 can be stored in the storage main body 20 in a shake-free manner, and the tool 30 can be directly and conveniently retrieved by a user from the opening portion 222 without removing the storage main body 20.

As shown in FIG. 2, each of the two engaging slots 221 has a gap with its direction substantially parallel to a longitudinal direction of the cylindrical member 21. In this embodiment, the carrying portion 22 further comprises at least one securing unit 223, wherein the securing unit 223 is disposed to the engaging slot 221.

When the user puts the tool 30 in the storage main body 20, the main lever 31 is continuously inserted into the elongated slot 211 from the opening portion 222 along the longitudinal direction of the cylindrical member 21. When the tool 30 is stored in the storage main body 20 and the side levers 32 arc engaged to the carrying portion 22, the securing unit 223 can secure the side levers 32 so as to fasten the tool 30 to the storage main body 20.

In this embodiment, the securing unit 223 is a clamping element, and the securing unit 223 can resiliently move and secures the tool 30 between the two engaging slots 221. The securing unit 223 can also secure the tool 30 between the two engaging slots 221 according to other mechanisms, such as utilizing a strong magnet to adhere the tool 30 to the engaging slots 221 by means of a strong magnetic force.

Correspondingly, when the user wants to retrieve the tool 30 from the storage main body 20, the user can directly grip the tool 30 to detach the side levers 32 from the securing unit 223, and then pull out the tool 30 from the cylindrical member 21 to use the tool 30.

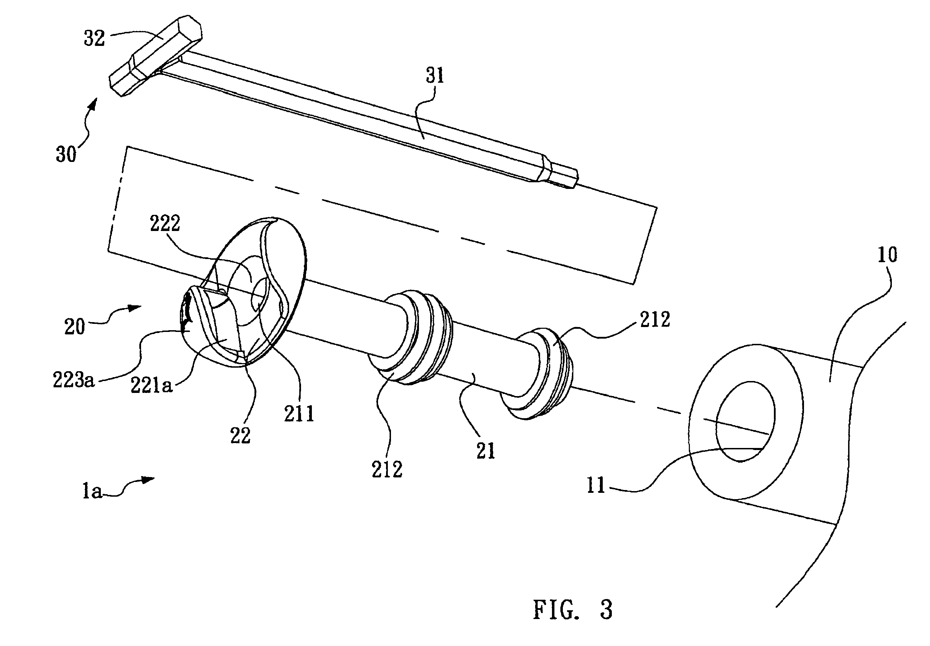

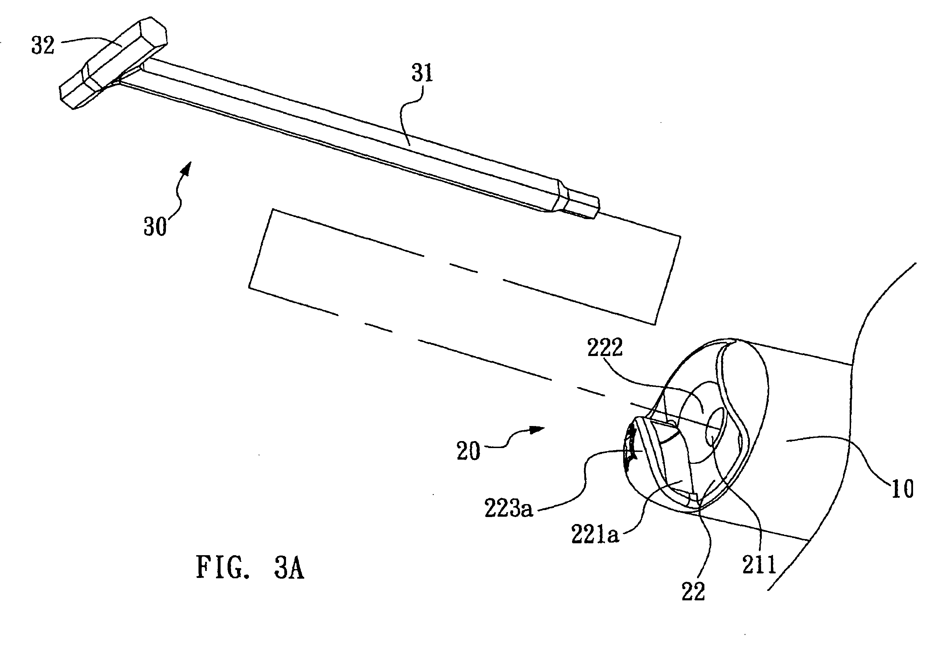

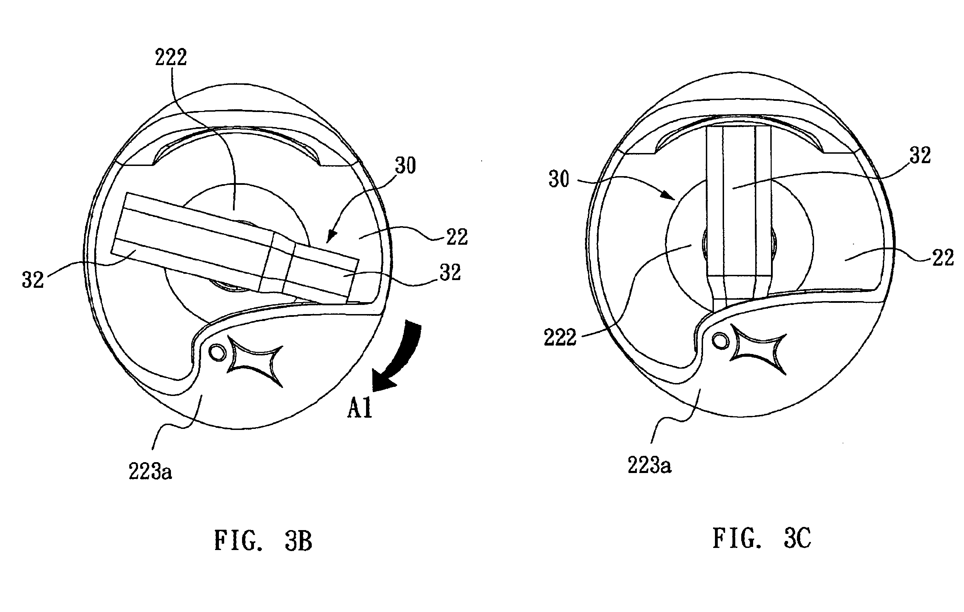

Next, please refer to FIG. 3, FIG. 3A, FIG. 3B, and FIG. 3C, wherein FIG. 3 illustrates a schematic drawing according to a second embodiment of the present invention; FIG. 3A illustrates another schematic drawing according to the second embodiment of the present invention; FIG. 3B illustrates a usage case schematic drawing according to the second embodiment of the present invention; and FIG. 3C illustrates another usage case schematic drawing according to the second embodiment of the present invention.

As shown in FIG. 3, the overall structure of the bicycle handlebar 1a of the present invention is mostly similar to that of the aforementioned embodiment. That is, the bicycle handlebar 1a comprises a grip 10, a storage main body 20, and a tool 30. The tool 30 is stored in the storage main body 20, and the storage main body 20 is installed inside the grip 10 (as shown in FIG. 3A). However, the major difference between this embodiment and the aforementioned embodiment is as follows: In this embodiment, the engaging slot 221a has a gap with its direction substantially perpendicular to the longitudinal direction of the cylindrical member 21.

In this embodiment, the securing unit 223a is a cap member disposed to one engaging slot 221a. That is, the securing unit 223a and part of the carrying portion 22 are connected.

When the user puts the tool 30 in the storage main body 20 and continuously pushes the tool 30 from the opening portion 222 along the longitudinal direction of the cylindrical member 21, the side lever 32 is pushed against the carrying portion 22, and then the user can rotate the tool 30 (along the direction A1 shown in FIG. 3B) so as to secure the side lever 32 into the securing unit 223a (as shown in FIG. 3C).

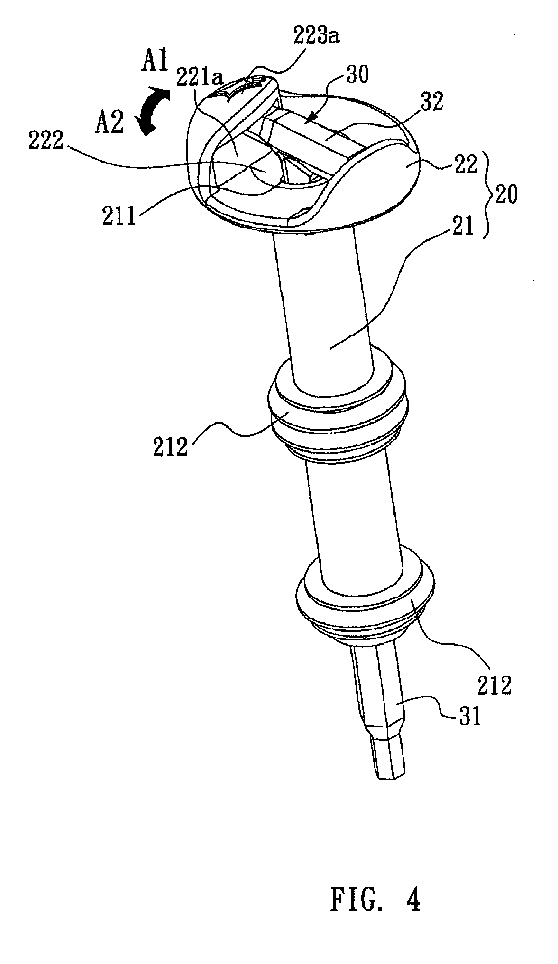

Please refer to FIG. 4, which illustrates a detailed assembly schematic drawing according to the second embodiment of the present invention.

As shown in FIG. 4, when the side lever 32 is rotated (along the direction A1 shown in FIG. 3B) to be secured by the securing unit 223a. The tool 30 can be tightly and securely stored in the storage main body 20 without freely sliding.

Correspondingly, when the user wants to retrieve the tool 30 from the storage main body 20, the user can first rotate the tool 30 along an inverse direction (i.e., along the direction A2 shown in FIG. 4), so as to release the side lever 32 from the securing unit 223a, and then pull out the tool 30 from the cylindrical member 21 to use the tool 30.

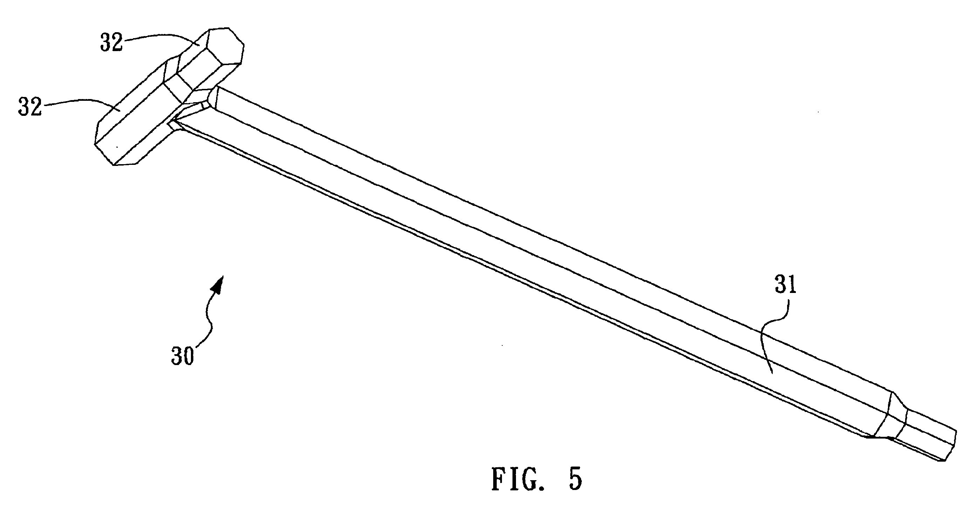

Finally, please refer to FIG. 5, which illustrates a detailed schematic drawing of a tool according to the present invention.

As shown in FIG. 5, the tool 30 of the present invention is composed of a main lever 31 and two side levers 32 substantially perpendicular to the main lever 31. However, the number of the side levers 32 is not limited to the above description.

In one embodiment, the side lever 32 is an Allen (hex) wrench. However, the side lever can also be a torx wrench, a ring spanner, a ratchet wrench, a hexagonal socket, a screwdriver, a spoke wrench, or any hand tool (or bicycle repair tool) in another form.

Although the present invention has been explained in relation to its preferred embodiments, it is to be understood that many other possible modifications and variations can be made without departing from the spirit and scope of the invention as hereinafter claimed.

## Claims

1. A bicycle handlebar (1, 1a), comprising a grip (10), the grip (10) comprising a grip storage slot (11), **characterized in that** the bicycle handlebar (1, 1a) further comprises:
a storage main body (20), comprising a cylindrical member (21) and a carrying portion (22), the carrying portion (22) being connected to the cylindrical member (21), wherein:
the cylindrical member (21) comprises an elongated slot (211), and the cylindrical member (21) is installed inside the grip storage slot (11), such that the storage main body (20) is fastened to the grip (10); and
the carrying portion (22) comprises at least one engaging slot (221, 221a) and an opening portion (222), wherein the at least one engaging slot (221, 221a) and the opening portion (222) are connected, and the carrying portion (22) is installed outside the grip storage slot (11);
and
a tool (30), comprising a main lever (31) and at least one side lever (32), wherein the main lever (31) is tightly received in the elongated slot (211), and the at least one side lever (32) is received in the at least one engaging slot (221, 221a).

2. The bicycle handlebar (1, 1a) as claimed in claim 1, wherein the carrying portion (22) further comprises at least one securing unit (223, 223a), disposed to the at least one engaging slot (221, 221a).

3. The bicycle handlebar (1) as claimed in claim 2, wherein the at least one engaging slot (221) has a gap with its direction substantially parallel to a longitudinal direction of the cylindrical member (21).

4. The bicycle handlebar (1) as claimed in claim 2 or 3, wherein the at least one securing unit (223) is a clamping member, and the securing unit (223) can resiliently move and secures the tool (30) to the at least one engaging slot (221).

5. The bicycle handlebar (1a) as claimed in claim 2, wherein the at least one engaging slot (221a) has a gap with its direction transverse to a longitudinal direction of the cylindrical member (21).

6. The bicycle handlebar (1a) as claimed in claim 2 or claim 5, wherein the at least one securing unit (223a) is a cap member disposed to the at least one engaging slot (221a), such that the at least one side lever (32) can be secured into the securing unit (223a) by means of rotating the tool (30).

7. The bicycle handlebar (1a) as claimed in claim 5 or claim 6, wherein the at least one securing unit (223) is a clamping member, and the securing unit (223) can resiliently move and secures the tool (30) to the at least one engaging slot (221a).

8. The bicycle handlebar (1, 1a) as claimed in any of the preceding claims, wherein the main lever (31) and the at least one side lever (32) are transverse to each other.

9. The bicycle handlebar (1, 1a) as claimed in any of the preceding claims, wherein the at least one side lever (32) is an Allen wrench.
